# EUROPÄISCHE PATENTSCHRIFT

(11) **EP 2 759 237 B1**
(45) Veröffentlichungstag und Bekanntmachung des Hinweises auf die Patenterteilung: **27.07.2016**
(21) Anmeldenummer: 14152013.0
(22) Anmeldetag: 21.01.2014
(51) Int. Cl.: A47J 31/58, A47J 31/44

(54) **HEIßGETRÄNKEZUBEREITUNGSEINRICHTUNG**
DEVICE FOR DISPENSING HOT DRINKS
DISPOSITIF DE DISTRIBUTION POUR BOISSON CHAUDE

(30) Priorität: 24.01.2013 DE 102013201138
(43) Veröffentlichungstag der Anmeldung: 30.07.2014
(73) Patentinhaber: BSH Hausgeräte GmbH, 81739 München (DE)
(72) Erfinder: Kirschner, Andreas, 83301 Traunreut (DE); Reichel, Thomas, 83278 Traunstein (DE)

(56) Entgegenhaltungen:
- EP-A1- 2 452 596

## Beschreibung

Die Erfindung betrifft eine Heißgetränkezubereitungseinrichtung, insbesondere einen Kaffeevollautomaten, mit einem Gehäuse und mit mindestens einem Ver- und/oder Entsorgungsbehälter. Versorgungsbehälter können Frischwasservorratsbehälter oder Kaffeebohnenbehälter sein, Entsorgungsbehälter können Auffangbehälter für entleerte Kapseln oder für Trester oder eine unterhalb eines Auslaufes im Gehäuse der Getränkezubereitungseinrichtung einsetzbare Tropfschale sein, wobei die Anwesenheit des oder der Ver- und/oder Entsorgungsbehälter(s) in der Getränkezubereitungseinrichtung überwacht wird.

Moderne Kaffeevollautomaten weisen eine Einrichtung auf, mit der der Benutzer bei Bedarf auf das Nachfüllen von Zubereitungswasser oder von Kaffeebohnen oder an das Entleeren der Tropfschale und des Tresterbehälters erinnert werden kann. So können ein Überlaufen des Behälters und daraus resultierende Betriebsstörungen vermieden werden.

Die EP 2 452 596 A1 beschreibt beispielsweise eine Getränkezubereitugsmaschine mit einer Sensoranordnung, die gekennzeichnet ist durch einen in Abhängigkeit vom Befüllungszustand betätigbaren Hebel, der in einer bestimmten, vordefinierten Stellung die Sensoranordnung so anregt, dass sie ein Erkennungssignal aktiviert.

Herkömmliche Kaffeevollautomaten besitzen einen permanenten Stromanschluss. So können in einem Stand-By-Modus einige Funktionen auch dann ausgeführt werden, wenn der Kaffeevollautomat nicht benutzt und daher ausgeschaltet wird. Dazu zählt zum Beispiel die Überwachung der Anwesenheit der Tropfschale. Dadurch kann vermieden werden, dass der Benutzer beim erneuten Anschalten des Kaffeevollautomaten aufgefordert wird, Tropfschale und Tresterbehälter zu leeren, obwohl diese Tätigkeiten bereits im ausgeschalteten Zustand des Kaffeevollautomaten erledigt wurden.

Die EU-Richtlinie 2009/125/EC "Ökodesign" verbietet solche Stand-By-Funktionen u. a. bei Kaffeevollautomaten. Ein Wegfallen der permanenten Stromversorgung führt dann dazu, dass eine Überwachung nach dem Stand der Technik nicht mehr möglich ist und der Benutzer zur Leerung und Reinigung der Tropfschale aufgefordert werden kann, obwohl diese Tätigkeiten bereits verrichtet sind.

Der vorliegenden Erfindung liegt daher die Aufgabe zugrunde, eine Heißgetränkezubereitungseinrichtung bereitzustellen, die auch ohne permanente Stromversorgung eine Überwachung einer möglichen Betätigung des oder der Verund/oder Entsorgungsbehälter(s) leistet und die keine fehlerhaften Meldungen an den Nutzer der Getränkezubereitungseinrichtung nach ihrem Einschalten abgibt.

Diese Aufgabe wird bei der eingangs genannten Heißgetränkezubereitungseinrichtung erfindungsgemäß durch eine zwei Segmente umfassende Einrichtung gelöst, mit der eine Überprüfung einer Betätigung des oder der Ver- und/oder Entsorgungsbehälter(s) erfolgt. In der Getränkezubereitungseinrichtung bzw. an ihrem Gehäuse ist ein Prüfsegment angeordnet, welches ein Schließelement und eine elektrisch versorgte Steuerspule umfasst. An dem Ver- und/oder Entsorgungsbehälter ist ein Auslösesegment angeordnet, das auf das Schließelement einwirkt. Das Schließelement ist in seine Öffnungsstellung mit einer Federvorrichtung vorgespannt, die als separate Zug-, Druck- oder Drehfeder oder durch die Materialelastizität des Schließelements selbst ausgebildet sein kann. Das Schließelement öffnet bei entnommenem Ver- und/oder Entsorgungsbehälter, nämlich sobald das Auslöseelement nicht mehr einwirkt. Nach einem Einsetzen des Ver- und/oder Entsorgungsbehälters in ihre dafür vorgesehene Position im Kaffeevollautomaten können die mit Strom beaufschlagte Steuerspule einerseits und das Auslösesegment andererseits gemeinsam auf das Schließelement einwirken, das sich daraufhin gegen die Kraft der Feder schließen lässt. Dabei sind die Wirkungskräfte des Auslösesegments und die Magnetkraft der mit Strom beaufschlagten Steuerspule so bemessen, dass beide Elemente nur gemeinsam die Kraft der Feder überwinden und ein Schließen des Schließelements erreichen.

Die Erfindung verfolgt also das Prinzip, nicht nur die bloße Anwesenheit eines Verund/oder Entsorgungsbehälters zu erfassen, sondern ihre eventuelle Betätigung, nämlich eine Entnahme und ein Wiedereinsetzen, zu überwachen. Dazu wählt sie für die Erfassungseinrichtung einen zweiteiligen Aufbau aus einem elektrischen und einem nichtelektrischen Bestandteil, die beide auf das in Öffnungsrichtung vorgespannte Schließelement einwirken müssen, um es zu schließen. Es öffnet, sobald der nichtelektrische Bestandteil nicht mehr wirkt oder auch nur vorübergehend nicht gewirkt hat. Die Information über die Öffnungs- oder Schließstellung des Schließelements wird an eine Steuereinrichtung der Getränkezubereitungseinrichtung weitergeleitet und dort verarbeitet.

Die offene oder geschlossene Stellung des Schließelements lässt sich zwar grundsätzlich mechanisch, vorteilhafterweise aber elektrisch feststellen. Erfindungsgemäß ist die Getränkezubereitungseinrichtung mit einer elektrischen Erfassungseinrichtung zum Überprüfen des Schließzustandes des Schließelements ausgestattet. Sie gibt ein entsprechendes elektrisches Signal an die Getränkezubereitungseinrichtung bzw. dessen Steuereinrichtung weiter.

Nach einer vorteilhaften Ausgestaltungsform der Erfindung stellt sich die Erfassungseinrichtung als Kontrollstromkreis unter Einschluss des Schließelements dar. Das Schließelement selbst kann als Schalter ausgebildet sein, der geöffnet den Kontrollstromkreis unterbricht. Führt der Kontrollstromkreis Strom, so kann der Stromfluss als Signal für die Schließstellung bzw. geschlossene Stellung des Schließelements verwendet werden. Sofern bei eingesetztem Ver- und/oder Entsorgungsbehälter die Getränkezubereitungseinrichtung eingeschaltet wird, wird die Steuerleitung mit einem Stromimpuls beaufschlagt. Das Auslösesegment und die angeregte Steuerspule wirken auf den Schalter und schließen ihn. Ein Kontrollstrom, der durch die Kontrollstromleitung und den nun geschlossenen Schalter fließt, kann das geschlossene Schließelement der Steuereinrichtung der Getränkezubereitungseinrichtung signalisieren. Die Anwesenheit des Ver- und/oder Entsorgungsbehälter ist somit bestätigt. Der Kontrollstromkreis ist kostengünstig, da er lediglich eine Koppelung an die Stromversorgung und einen Leitungskreis zum Schalter hin und von ihm weg umfasst.

Alternativ zu einem Kontrollstromkreis kann die Erfassungseinrichtung der Getränkezubereitungseinrichtung als optisches Erfassungsmittel ausgestaltet sein. Ein Wechsel des Schließelements von "offen" auf "geschlossen" kann z. B. durch eine Lichtschranke erfasst und entsprechend an die Steuereinrichtung der Getränkezubereitungseinrichtung signalisiert werden. Auch diese Erfassungseinrichtung ist kostengünstig zu produzieren.

In einer vorteilhaften Ausgestaltung der Getränkezubereitungseinrichtung ist das Auslösesegment ein Magnet, wobei ein Dauermagnet zu bevorzugen ist. Seine Magnetkraft kann auf ein entsprechend gestaltetes Schließelement wirken. Magneten sind kostengünstig und robust. Ihr Einsatz bietet sich an, weil das Auslösesegment insbesondere bei der Reinigung des Ver- und/oder Entsorgungsbehälters nicht beschädigt werden darf, da sonst fehlerhafte Meldungen die Funktion der Getränkezubereitungseinrichtung beeinträchtigen.

Erfindungsgemäß wirken der Magnet und die angeregte Steuerspule in einer Schließrichtung auf das Schließelement. Es lässt sich nur schließen, wenn sowohl der Magnet als auch die angeregte Steuerspule auf das Schließelement wirken. So kann gewährleistet werden, dass das Schließelement ohne eingesetzten Ver- und/oder Entsorgungsbehälter nicht geschlossen wird. Damit kann keine Fehlinformation über die Anwesenheit des Ver- und/oder Entsorgungsbehälters weitergegeben werden.

Nach einer dazu alternativen Ausgestaltungsform der Erfindung kann der Ver- und/oder Entsorgungsbehälter über ein Auslösesegment verfügen, das mechanisch auf das Schließelement wirkt. Zum Beispiel kann ein Stift, eine Nase oder ein Riegel an dem Verund/oder Entsorgungsbehälter bei seinem Einsetzten derart auf das Schließelement wirken, dass es zunächst einen ersten Teil einer Schließbewegung vollzieht und erst durch den Stromimpuls auf die Steuerspule endgültig geschlossen wird. Damit kann sich sogar die Montage eines Magneten erübrigen.

Nach einer weiteren alternativen Ausgestaltung der Erfindung kann das Auslöselement einen zapfenartigen Abschnitt aus einem magnetisierbaren Material umfassen, der beim Einsetzen des Ver- und/oder Entsorgungsbehälters als den magnetischen Fluss verstärkender Kern in die Steuerspule eingeschoben wird. Über induktive Anregung beim Einführen des zapfenartigen Abschnitts in die Steuerspuie kann die Feldstärke der bestromten Spule erhöht bzw. ihr Magnetfeld derart verstärkt, dass es das Schließelement schließt. Damit bietet sich nicht nur eine technische, sondern auch eine räumliche Alternative zu den bisherigen Erfassungseinrichtungen, die räumlich getrennt und weitgehend einander gegenüber anzuordnen sind.

Nach einer weiteren vorteilhaften Ausgestaltung der Getränkezubereitungseinrichtung sind akustische und/oder optische Signalisierungsmittel vorgesehen, die bei geöffnetem Schließelement die Abwesenheit des Ver- und/oder Entsorgungsbehälters signalisieren. Für den Fall, dass der Ver- und/oder Entsorgungsbehälter nicht eingesetzt ist, kann ein entsprechendes Warnsignal an den Nutzer ausgegeben werden. Dies erhöht die Bedienungssicherheit.

Das Prinzip der Erfindung wird im Folgenden anhand von Zeichnungen beispielshalber noch näher erläutert. In der Zeichnung zeigen:
- Figur 1:: eine erfindungsgemäße Einrichtung zur Überprüfung der Anwesenheit der Tropfschale vor Einschalten des Kaffeevollautomaten,
- Figur 2:: eine erfindungsgemäße Einrichtung zur Überprüfung der Anwesenheit der Tropfschale bei der Anregung der Steuerspule und
- Figur 3:: eine erfindungsgemäße Einrichtung zur Überprüfung der Anwesenheit der Tropfschale bei entnommener Tropfschale.

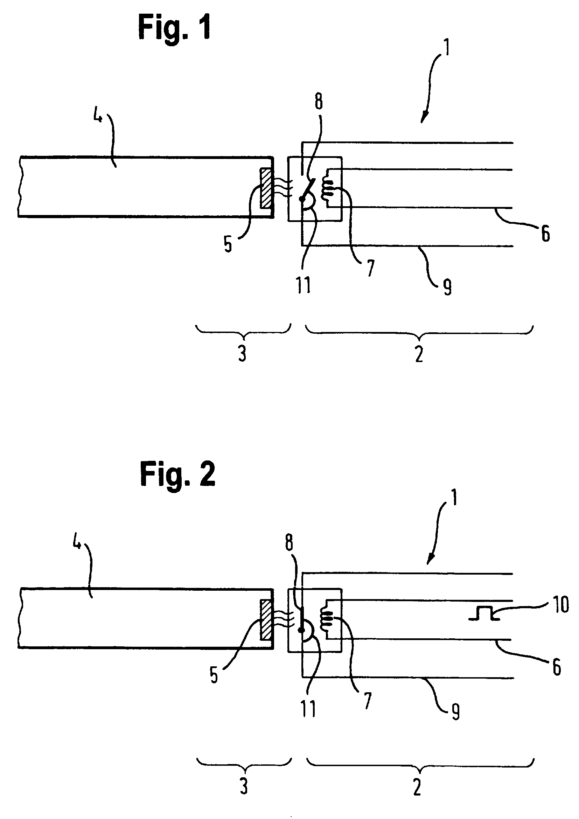

Figur 1 zeigt die erfindungsgemäße Einrichtung 1 zur Überprüfung der Anwesenheit einer Tropfschale 4 als Beispiel für einen Entsorgungsbehälter eines Kaffeevollautomaten als Beispiel für eine Getränkezubereitungseinrichtung. Die Einrichtung 1 unterteilt sich in ein Prüfsegment 2 und ein Auslösesegment 3. Das Prüfsegment 2 ist in einem Gehäuse des Kaffeevollautomaten untergebracht, das Auslösesegment 3 ist an der Tropfschale 4 angeordnet. Das Auslösesegment 3 besteht im Wesentlichen aus einem Dauermagneten 5. Das Prüfsegment 2 umfasst eine Steuerleitung 6 mit einer Steuerspule 7 und einen Schalter 8, der Teil einer elektrischen Kontrollleitung 9 ist. Eine Feder 11 spannt den Schalter 8 in seine in Figur 1 gezeigte Öffnungsstellung vor.

Sobald die Steuerleitung 6 mit Strom beaufschlagt wird, erzeugt die Steuerspule 7 eine abstoßende Magnetkraft, die gegen die Kraft der Feder 11 auf den Schalter 8 in dessen Schließrichtung wirkt. Ebenfalls in Schließrichtung des Schalters 8 wirkt die anziehende Magnetkraft des Magneten 5. Nur wenn sowohl der Magnet 5 als auch die bestromte Steuerspule 7 auf den Schalter 8 einwirken, wird er gegen die Kraft der Feder 11 geschlossen. Der Magnet 5 ist jedoch so stark, dass er den Schalter 8 in seinem geschlossenen Schaltzustand festhalten kann. Bei stromloser Steuerspule 7 wirkt nur der an der Tropfschale 4 angeordnete Magnet 5 allein auf den Schalter 8 ein, ohne ihn jedoch gegen die Kraft der Feder 11 schließen zu können. Durch Anlegen von Strom an die Kontrollleitung 9 lässt sich feststellen, dass der Schalter 8 geöffnet ist, weil kein Strom fließt.

In Figur 2 ist dieselbe Einrichtung 1 gezeigt, wobei die Steuerleitung 6 mit einem Stromimpuls 10 beaufschlagt ist. Er regt die in der Steuerleitung 6 angeordnete Steuerspule 7 an, die ein Magnetfeld aufbaut und damit auf den Schalter 8 wirkt. Da auch schon der Magnet 5 auf den Schalter 8 in seiner Schließrichtung wirkt, schließt er, und ein Kontrollstrom kann durch die Kontrollleitung 9 fließen. Ein entsprechendes Signal über die Anwesenheit der Tropfschale 4 wird an den Kaffeevollautomaten weitergegeben und dort entsprechend verarbeitet.

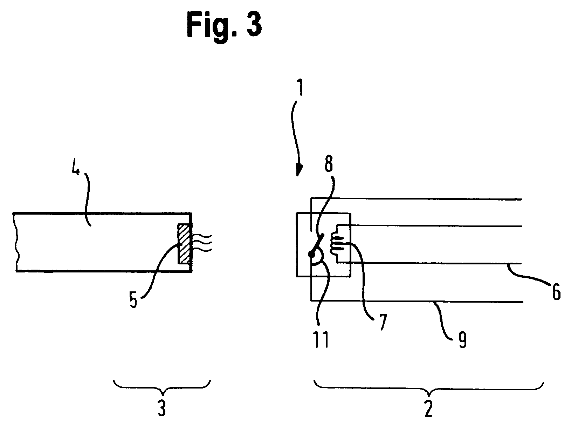

In Figur 3 ist die Tropfschale 4 aus dem Kaffeevollautomaten entnommen worden. Der an der Tropfschale 4 angeordnete Magnet 5 kann nun nicht mehr auf den Schalter 8 einwirken. Der Schalter 8 öffnet sich daraufhin der Kraftrichtung der Feder 11 folgend. In diesem Zustand reicht der Stromimpuls 10 nicht aus, um den Schalter 8 zu schließen. Die Kontrollleitung 9 bleibt daher am Schalter 8 unterbrochen, so dass kein Kontrollstrom fließen kann. Dieser Umstand wird in einer Steuereinrichtung des Kaffeevollautomaten zu einem entsprechenden Signal an den Benutzer verarbeitet, das ihn zum Einsetzen der Tropfschale 4 auffordert.

Bei voller Tropfschale 4 wird der Benutzer aufgefordert, sie zu entleeren. Schaltet der Kaffeevollautomat ab oder wird er abgeschaltet, bevor diese Servicetätigkeit vorgenommen wurde, und nimmt sie der Benutzer bei abgeschaltetem Kaffeevollautomaten vor, wird er nach erneutem Einschalten erfindungsgemäß nicht mehr dazu aufgefordert, weil der Automat das Entnehmen und Wiedereinsetzen der (als inzwischen entleert angenommenen) Tropfschale detektieren kann:
Im Betrieb des Kaffeevollautomaten hat der Stromimpuls 10 den Schalter 8 im Zusammenwirken mit dem Magneten 5 geschlossen (vgl. Figur 2), was durch Stromfluss durch die Kontrollleitung 9 überprüft und der Steuereinrichtung signalisiert wurde. Wegen voller Tropfschale 4 erhält der Benutzer jetzt eine Aufforderung, die Tropfschale zu entnehmen und zu entleeren. Der Benutzer kommt dieser Aufforderung jedoch nicht sofort nach. Noch bevor er die verlangte Servicetätigkeit vorgenommen hat, schaltet der Kaffeevollautomat z. B. wegen Überschreitung einer definierten Zeitspanne seiner Inaktivität ab.

Erst jetzt entnimmt der Benutzer die Tropfschale 4 und entleert sie (vgl. Figur 1). Dabei springt der Schalter 8 auf, weil der Magnet 5 ihn nicht mehr geschlossen hält. Er bleibt geöffnet, auch nachdem der Benutzer die Tropfschale 4 wieder eingesetzt hat (vgl. Figur 2).

Nach einem erneuten Einschalten des Kaffeevollautomaten legt er zunächst Strom an die Kontrollleitung 9 an. Da sie durch den geöffneten Schalter 8 unterbrochen ist, erhält die Steuereinrichtung die Information, dass die Tropfschale 4 zumindest entnommen worden war. Ob sie wieder eingesetzt ist, testet die Steuereinrichtung mithilfe des Stromimpulses 10: Kann er den Schalter 8 schließen, ist die Tropfschale 4 anwesend (und wurde vermutlich geleert; vgl. Figur 2). Gelingt dies nicht, ist die Tropfschale 4 noch nicht wieder eingesetzt (vgl. Figur 1), und der Benutzer wird dazu (und ggf. zu ihrem vorherigen Entleeren) aufgefordert.

Da es sich bei der vorhergehenden, detailliert beschriebenen Einrichtung zum Überprüfen einer Betätigung der Tropfschale um ein Ausführungsbeispiel handelt, kann sie in üblicher Weise vom Fachmann in einem weiten Umfang modifiziert werden, ohne den Bereich der Erfindung zu verlassen. Insbesondere kann die Ausführung des Auslösesegments an der Tropfschale oder die Gestaltung des Prüfsegments geändert werden und folglich die Ausgestaltung der Einrichtung in anderer Form als in der hier beschriebenen erfolgen. Ebenso kann die Ausgestaltung der Einrichtung oder ihrer Bauteile in einer anderen Form vorgenommen werden, wenn dies z.B. aus Platz- oder designerischen Gründen notwendig ist. Sie kann darüber hinaus auch ab einem oder mehreren anderen Ver- oder Entsorgungsbehältern einer Heißgetränkezubereitungseinrichtung, beispielsweise an einem Wasservorrats-, Kapsel- und/oder Kaffeebohnenbehälter eingesetzt werden. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Einrichtung
- 2: Prüfsegment
- 3: Auslösesegment
- 4: Tropfschale
- 5: Magnet
- 6: Steuerleitung
- 7: Steuerspule
- 8: Schalter
- 9: Kontrollleitung
- 10: Stromimpuls
- 11: Feder

## Patentansprüche

1. Heißgetränkezubereitungseinrichtung mit einem Gehäuse und mit mindestens einem Ver- und/oder Entsorgungsbehälter (4), **gekennzeichnet durch** eine Einrichtung (1) zur Überprüfung einer Betätigung des Ver- und/oder Entsorgungsbehälters (4) in der Heißgetränkezubereitungseinrichtung mit einem am Gehäuse angeordneten Prüfsegment (2), welches ein Schließelement (8) und eine Steuerleitung (6) mit Steuerspule (7) umfasst und das Schließelement bei entnommenem Ver- und/oder Entsorgungsbehälter (4) öffnet, und mit einem Auslösesegment (3) an dem Verund/oder Entsorgungsbehälter (4), wobei sich das Schließelement nur gemeinsam durch die mit Strom beaufschlagte Steuerspule (7) einerseits und **durch** das Auslösesegment (3) andererseits schließen lässt.

2. Heißgetränkezubereitungseinrichtung nach Anspruch 1, **gekennzeichnet durch** eine Erfassungseinrichtung zum Überprüfen des Schließzustandes des Schließelements (8).

3. Heißgetränkezubereitungseinrichtung nach Anspruch 2, **gekennzeichnet durch** eine Kontrollleitung (9) unter Einschluss des Schließelements als Erfassungseinrichtung, wobei das Schließelement als Schalter (8) ausgebildet ist.

4. Heißgetränkezubereitungseinrichtung nach Anspruch 2, **gekennzeichnet durch** optische Mittel als Erfassungseinrichtung.

5. Heißgetränkezubereitungseinrichtung nach einem der vorhergehenden Ansprüche, **gekennzeichnet durch** einen Magneten (5) als Auslösesegment.

6. Heißgetränkezubereitungseinrichtung nach einem der vorhergehenden Ansprüche, **dadurch gekennzeichnet, dass** der Magnet (5) und die angeregte Steuerspule (7) in einer Schließrichtung auf das Schließelement (8) einwirken, wobei das Schließelement (8) nur schließt, wenn sowohl der Magnet (5) als auch die angeregte Steuerspule (7) auf das Schließelement (8) wirken.

7. Heißgetränkezubereitungseinrichtung nach den Ansprüchen 1 bis 4, **dadurch gekennzeichnet, dass** das Auslösesegment mechanisch auf das Schließelement (8) wirkt.

8. Heißgetränkezubereitungseinrichtung nach den vorhergehenden Ansprüchen, **gekennzeichnet durch** akustische und/oder optische Signalisierungsmittel, die die Abwesenheit des Ver- und/oder Entsorgungsbehälters (4) signalisieren.

9. Kaffeevollautomat als Heißgetränkezubereitungseinrichtung nach einem der vorhergehenden Ansprüche, mit einem Gehäuse und einer unterhalb eines Auslaufes im Gehäuse des Kaffeevollautomaten einsetzbaren Tropfschale (4), **gekennzeichnet durch** eine Einrichtung (1) zur Überprüfung einer Betätigung der Tropfschale (4) im Kaffeevollautomaten mit einem am Gehäuse angeordneten Prüfsegment (2), welches ein Schließelement (8) und eine Steuerleitung (6) mit einer Steuerspule (7) umfasst und das Schließelement bei entnommener Tropfschale (4) öffnet, und mit einem Auslösesegment (3) an der Tropfschale (4), wobei sich das Schließelement nur gemeinsam **durch** die mit Strom beaufschlagte Steuerspule (7) einerseits und **durch** das Auslösesegment (3) andererseits schließen lässt.

10. Heißgetränkezubereitungseinrichtung nach einem der Ansprüche 1 bis 8, mit einem Frischwasservorratsbehälter und/oder einem Kaffeebohnenbehälter als Versorgungsbehälter und/oder einem Auffangbehälter für entleerte Kapseln und/oder einem Tresterbehälter und/oder einer Restwasserschale und/oder einer Tropfschale als Entsorgungsbehälter.

## Claims

1. Device for dispensing hot drinks having a housing and having at least one supply and/or waste container (4), **characterised by** a device (1) for checking an actuation of the supply and/or waste container (4) in the device for dispensing hot drinks with a checking segment (2) arranged on the housing which comprises a closure element (8) and a control line (6) with control coil (7) and opens the closure element when the supply and/or waste container (4) is removed, and with a release segment (3) on the supply and/or waste container (4) wherein the closure element can only be closed jointly by the energised control coil (7) on the one hand and by the release segment (3) on the other hand.

2. Device for dispensing hot drinks according to claim 1, **characterised by** a detection device for checking the closure state of the closure element (8).

3. Device for dispensing hot drinks according to claim 2, **characterised by** a control line (9) including the closure element as a detection device, wherein the closure element is designed as a switch (8).

4. Device for dispensing hot drinks according to claim 2, **characterised by** optical means as a detection device.

5. Device for dispensing hot drinks according to one of the preceding claims, **characterised by** a magnet (5) as a release segment.

6. Device for dispensing hot drinks according to one of the preceding claims, **characterised in that** the magnet (5) and the actuated control coil (7) act on the closure element (8) in a closing direction, wherein the closure element (8) can be closed only if both the magnet (5) and the actuated control coil (7) act on the closure element (8).

7. Device for dispensing hot drinks according to claims 1 to 4, **characterised in that** the release segment acts mechanically on the closure element (8).

8. Device for dispensing hot drinks according to one of the preceding claims, **characterised by** acoustic and/or visual signalling means, which signal the absence of the supply and/or waste container (4).

9. Fully automatic coffee machine as a device for dispensing hot drinks according to one of the preceding claims, having a housing and a drip tray (4) which can be inserted beneath an outlet in the housing of the fully automatic coffee machine, **characterised by** a device (1) for checking an actuation of the drip tray (4) in the fully automatic coffee machine with a checking segment (2) arranged on the housing which comprises a closure element (8) and a control line (6) with a control coil (7) and opens the closure element when the drip tray (4) is removed, and with a release segment (3) on the drip tray (4) wherein the closure element can only be closed jointly by the energised control coil (7) on the one hand and by the release segment (3) on the other hand.

10. Device for dispensing hot drinks according to one of claims 1 to 8, having a fresh water reservoir and/or a coffee bean container as a waste container and/or a collecting vessel for empty capsules and/or a residue container and/or a residue water tray and/or a drip tray as waste containers.

## Revendications

1. Dispositif de préparation de boissons chaudes comprenant un boîtier et au moins un réservoir d'alimentation et/ou d'évacuation (4), **caractérisé par** un agencement (1) destiné à vérifier un actionnement du réservoir d'alimentation et/ou d'évacuation (4) dans le dispositif de préparation de boissons chaudes à l'aide d'un segment de vérification (2) disposé sur le boîtier, lequel segment de vérification comprend un élément de fermeture (8) et une conduite de commande (6) munie d'une bobine de commande (7) et ouvre l'élément de fermeture lorsque le réservoir d'alimentation et/ou d'évacuation (4) est retiré, et comprenant un segment de déclenchement (3) sur le réservoir d'alimentation et/ou d'évacuation (4), l'élément de fermeture se laissant fermer seulement en commun au moyen de la bobine de commande (7) alimentée en courant, d'une part, et du segment de déclenchement (3), d'autre part.

2. Dispositif de préparation de boissons chaudes selon la revendication 1, **caractérisé par** un dispositif de détection destiné à vérifier l'état de fermeture de l'élément de fermeture (8).

3. Dispositif de préparation de boissons chaudes selon la revendication 2, **caractérisé par** une conduite de contrôle (9) avec insertion de l'élément de fermeture, en tant que dispositif de détection, l'élément de fermeture étant réalisé comme commutateur (8).

4. Dispositif de préparation de boissons chaudes selon la revendication 2, **caractérisé par** des moyens optiques en tant que dispositif de détection.

5. Dispositif de préparation de boissons chaudes selon l'une quelconque des revendications précédentes, **caractérisé par** un aimant (5) en tant que segment de déclenchement.

6. Dispositif de préparation de boissons chaudes selon l'une quelconque des revendications précédentes, **caractérisé en ce que** l'aimant (5) et la bobine de commande excitée (7) agissent sur l'élément de fermeture (8) dans un sens de fermeture, l'élément de fermeture (8) fermant uniquement lorsqu'aussi bien l'aimant (5) que la bobine de commande excitée (7) agissent sur l'élément de fermeture (8).

7. Dispositif de préparation de boissons chaudes selon l'une quelconque des revendications 1 à 4, **caractérisé en ce que** le segment de déclenchement agit mécaniquement sur l'élément de fermeture (8).

8. Dispositif de préparation de boissons chaudes selon l'une quelconque des revendications précédentes, **caractérisé par** des moyens de signalisation acoustiques et/ou optiques qui signalent l'absence du réservoir d'alimentation et/ou d'évacuation (4).

9. Machine à café entièrement automatique en tant que dispositif de préparation de boissons chaudes selon l'une quelconque des revendications précédentes, comprenant un boîtier et un bac de récupération (4) insérable dans le boîtier de la machine à café entièrement automatique en dessous d'une sortie, **caractérisée par** un agencement (1) de vérification d'un actionnement du bac de récupération (4) dans la machine à café entièrement automatique à l'aide d'un segment de vérification (2) disposé sur le boîtier, lequel segment de vérification comprend un élément de fermeture (8) et une conduite de commande (6) munie d'une bobine de commande (7) et ouvre l'élément de fermeture lorsque le bac de récupération (4) est retiré, et comprenant un segment de déclenchement (3) sur le bac de récupération (4), l'élément de fermeture se laissant fermer seulement en commun au moyen de la bobine de commande (7) alimentée en courant, d'une part, et du segment de déclenchement (3), d'autre part.

10. Dispositif de préparation de boissons chaudes selon l'une quelconque des revendications 1 à 8, comprenant un réservoir d'eau fraîche et/ou un réservoir de grains de café en tant que réservoir d'alimentation et/ou un réservoir de récupération des capsules vidées et/ou un réservoir de marc et/ou un bac pour l'eau restante et/ou un bac de récupération en tant que réservoir d'évacuation.
